# FASCICULE DE BREVET EUROPEEN

(11) **EP 0 488 858 B1**
(45) Date de publication et mention de la délivrance du brevet: **30.11.1994**
(21) Numéro de dépôt: 91403150.5
(22) Date de dépôt: 22.11.1991
(51) Int. Cl.: F02K 9/64

(54) **Procédé de fabrication de paroi de chambre de combustion, notamment pour moteur-fusée, et chambre de combustion obtenue par ce procédé**
Herstellungsweise einer Brennkammerwand, insbesondere für einen Raketenmotor und durch diese Methode hergestellte Brennkammer
Production method for a combustion chamber wall especially for a racket motor and combustion chamber produced by this method

(30) Priorité: 30.11.1990 FR 9015073
(43) Date de publication de la demande: 03.06.1992
(73) Titulaire: SOCIETE EUROPEENNE DE PROPULSION, 92150 Suresnes (FR)
(72) Inventeur: Vandendriessche, Georges, F-27200 Vernon (FR)
(74) Mandataire: Thévenet, Jean-Bruno

(56) Documents cités:
- DE-B- 2 015 024
- GB-A- 2 196 391
- US-A- 2 968 918
- US-A- 3 182 448
- US-A- 3 289 943
- US-A- 3 460 759
- JOURNAL OF PROPULSION AND POWER. vol. 2, no. 1, 1 Février 1986, NEW YORK USpages 25 - 30; M. NIINO, A. KUMAKAWA AND R. WATANABE: 'EVALUATION OF COLDISOSTATIC PRESSING OF HIGH-PRESSURE THRUST CHAMBER CLOSEOUT'

## Description

### Domaine de l'invention

La présente invention concerne un procédé de fabrication de paroi de chambre de combustion à canaux essentiellement longitudinaux, notamment pour moteur-fusée, selon lequel on assemble des premier et deuxième feuillards métalliques soudés l'un à l'autre et conformés de manière à présenter des ondulations entre les cordons de soudure, de manière à ménager des passages pour un fluide de refroidissement ou de réchauffement.

Les parois des enceintes de combustion telles que les chambres de combustion et les tuyères des moteurs-fusées, notamment à propergols liquides, haque fois qu'elles sont en contact un milieu de température élevée, sont en général refroidies pendant leur fonctionnement.

Un mode de refroidissement courant consiste à munir les parois d'enceintes de canaux de refroidissement. Ceci est le cas dans des lanceurs de satellites et avions spatiaux, mais également dans des propulseurs de satellites, des réacteurs nucléaires et des chaudières de haut rendement, et peut encore être le cas dans des boucliers thermiques ou nez d'engins volant à grande vitesse.

On a ainsi déjà proposé, notamment dans le cadre de moteurs-fusées, divers procédés de fabrication de parois de chambres de combustion permettant d'intégrer des canaux de refroidissement orientés en direction longitudinale, dans lesquels circule un fluide de refroidissement qui peut être l'un des ergols servant à alimenter le moteur-fusée, le système de refroidissement étant ainsi à régénération.

Les techniques de fabrication de telles chambres de combustion sont cependant délicates à mettre en oeuvre, longues et coûteuses.

Dans certaines applications particulières, il est également utile de pouvoir réchauffer une enceinte froide, par circulation d'un fluide chaud dans les passages ménagés entre les premier et second feuillards constituant la paroi de l'enceinte.

### Art antérieur

Selon une première technique de fabrication de chambres de combustion refroidies par régénération pour moteurs-fusées à propergols liquides, des canaux de refroidissement sont usinés dans un corps de base interne formé d'une seule pièce à partir d'un matériau métallique bon conducteur de la chaleur, tel que du cuivre. Les canaux de refroidissement sont ainsi séparés les uns des autres par des cloisons du corps de base et un couvercle externe est réalisé par électrodéposition de multiples couches de nickel en alternance avec des reprises d'usinage obligatoires entre chaque passe d'électrodéposition. L'obturation des canaux avant l'électrodéposition est obtenue par application d'une résine conductrice.

Une telle technique de fabrication est longue et coûteuse notamment du fait des nécessités d'usinage des canaux.

A titre de variante, l'obturation des canaux peut être effectuée à l'aide de quartz ou de céramiques en lieu et place de la résine conductrice. La dissolution du matériau de remplissage des canaux est alors réalisée par dissolution chimique sélective. Une telle technique est délicate et difficile à mettre en oeuvre en raison de la fragilité du quartz.

Selon une autre technique connue de fabrication de chambres de combustion ou d'éléments de chambre de combustion pour moteurs-fusées, les systèmes de refroidissement sont constitués par des tubes individuels calibrés mis en forme et assemblés par soudage ou brasage, qui constituent ainsi la paroi même de la chambre dont la tenue mécanique est renforcée par un cerclage.

Une telle technique s'avère également longue et complexe compte tenu du grand nombre d'éléments individuels à assembler, et ne permet pas une grande souplesse dans le choix des caractéristiques des tubes définissant les canaux de refroidissement.

On connaît encore par le document US-A-3 249 989 un procédé de réalisation de chambres de combustion à double paroi à partir de feuillards métalliques soudés entre eux puis déformés dans leurs parties non soudées pour définir des canaux de circulation d'un fluide de refroidissement. La déformation par soufflage des assemblages de feuillards métalliques présoudés ne permet toutefois pas d'obtenir des canaux de refroidissement de forme et de dimension optimisées et les assemblages proposés dans le document précité ne sont pas adaptables à des chambres de combustion de petites dimensions.

Le document US-A-3 235 947 divulgue également un procédé de fabrication d'une chambre de combustion à partir d'un ensemble de deux éléments tubulaires emboîtés pour former une chambre de combustion à double paroi. Dans ce cas, des nervures ou ondulations axiales sont formées sur au moins l'un des éléments tubulaires de manière à venir en contact avec l'autre élément tubulaire après emboîtement des deux éléments tubulaires et ces éléments tubulaires sont assemblés par soudage le long des nervures ou ondulations. Les canaux sont ensuite formés par introduction d'un fluide sous pression dans les passages libres entre les cordons de soudure axiaux. Là encore, la mise en forme définitive des canaux de refroidissement après soudage des deux éléments tubulaires emboîtés empêche la réalisation de configurations optimisées notamment quant à la forme ou l'évolution de la section des canaux en fonction de la position axiale le long de la chambre de combustion.

Un procédé de fabrication de paroi de chambre de combustion, correspondant au préambule de la revendication 1, est divulgué dans le document US-A-2 968 918.

### Objet et description succincte de l'invention

L'invention a pour objet de remédier aux inconvénients précités et de permettre la fabrication d'une paroi de chambre de combustion de façon plus rapide, plus simple et moins coûteuse que selon les procédés de l'art antérieur tout en offrant une souplesse plus grande dans le choix de la nature des matériaux utilisés ainsi que dans la forme et les dimensions des canaux de refroidissement et des parois délimitant ceux-ci afin d'optimiser les échanges thermiques tout en maintenant une rigidité satisfaisante pour une masse réduite.

Ces buts sont atteints grâce à un procédé de fabrication de paroi de chambre de combustion à canaux essentiellement longitudinaux, notamment pour moteur-fusée, selon lequel on assemble des premier et deuxième feuillards métalliques soudés l'un à l'autre et conformés de manière à présenter des ondulations entre les cordons de soudure, de manière à ménager des passages pour un fluide de refroidissement ou de réchauffement,
caractérisé en ce qu'il comprend les étapes suivantes :
**a)** réaliser une enveloppe interne métallique ondulée par déformation d'un premier feuillard plan ou tubulaire,
**b)** réaliser une enveloppe externe métallique à partir d'un second feuillard plan ou tubulaire,
**c)** assembler et souder localement l'enveloppe interne ondulée et l'enveloppe externe,
**d)** former un revêtement interne sur la paroi interne de l'enveloppe interne ondulée par la technique de la métallurgie des poudres en utilisant un conteneur pour le matériau destiné à constituer le revêtement interne, la paroi externe dudit conteneur étant constituée directement par la paroi interne de ladite enveloppe interne ondulée et la paroi interne dudit conteneur étant réalisée à partir d'enclumes non consommables amovibles, ou à partir d'un noyau soluble éliminé par dissolution chimique sélective après formation du revêtement interne par application d'un cycle de compaction isostatique à chaud, et
**e)** former un revêtement externe sur la paroi externe de l'enveloppe externe.

Par la formation complète des ondulations sur l'enveloppe interne métallique avant même son assemblage avec l'enveloppe externe métallique, le procédé selon l'invention autorise la réalisation de canaux de refroidissement de formes et de dimensions très variées qui peuvent être adaptées pour optimiser les échanges thermiques. En particulier, il est aisé de réaliser des canalisations de refroidissement présentant des sections évolutives, avec par exemple une section plus faible au niveau d'un col de tuyère.

La fabrication d'une chambre de combustion complète est par ailleurs grandement facilitée car la réalisation d'une enveloppe interne adaptée aux fonctions requises c'est-à-dire présentant une bonne stabilité chimique et une bonne résistance à l'érosion au contact des gaz chauds et présentant une bonne conductibilité, peut être réalisée à partir des techniques de la métallurgie des poudres d'une façon extrêmement simple puisque la paroi externe du conteneur spécifique destiné à recevoir les poudres à compacter est constituée directement par l'enveloppe interne ondulée délimitant les canaux de refroidissement ou de réchauffement, c'est-à-dire par une partie du produit fini, tandis que par la technique du noyau solubleou par celle d'un noyau à enclumes amovibles l'enveloppe interne du conteneur peut être réalisée sans difficulté.

On notera que la technologie de la métallurgie des poudres permet notamment de choisir, pour le revêtement interne, des métaux ou alliages métalliques présentant une bonne conductibilité thermique, même s'ils sont difficiles ou impossibles à usiner, puisque par la technologie du noyau ou mandrin soluble ou par celle des enclumes amovibles, des formes simples par exemple une surface lisse, de même que des formes complexes, telles qu'un gaufrage de la paroi interne, consistant en de petits reliefs et notamment de petites ondulations, qui améliore les échanges thermiques, peuvent être obtenues avec pour seules opérations supplémentaires de simples usinages finitions et de l'état de surface.

Selon une caractéristique particulière de l'invention, le revêtement externe est formé directement sur la paroi externe de l'enveloppe externe par plasmaformage de poudres métalliques ou céramiques.

La mise en oeuvre de la technique de plasmaformage est aisée dès lors qu'il n'est pas nécessaire de créer une couche d'accrochage continue et métallique avant projection d'un plasma métallique ou céramique puisque l'enveloppe externe offre sur sa face externe une surface métallique continue capable de supporter une température de l'ordre de 200°C pour favoriser l'adhérence du dépôt plasma pendant l'opération de projection.

Cette technique de plasmaformage permet notamment de déposer en tant que revêtement externe une couche d'alliage ou de céramique dont la composition peut être évolutive au sein de l'épaisseur de cette couche d'alliage ou homogène notamment dans le cas de céramique et présente des caractéristiques mécaniques pouvant contribuer à diminuer l'épaisseur de ce revêtement externe, et donc conduire à un allègement du produit.

Selon un autre mode de réalisation, le revêtement externe est formé directement sur la paroi externe de l'enveloppe externe par cerclage ou bobinage à l'aide d'un matériau composite.

Le revêtement externe peut encore être réalisé par électrodéposition sur la paroi externe de l'enveloppe externe.

L'enveloppe externe métallique peut être réalisée sans ondulation par simple roulage du second feuillard ou au contraire peut, comme l'enveloppe interne, présenter des ondulations produites par déformation du second feuillard.

Selon un mode particulier de réalisation de l'invention, les ondulations de l'enveloppe interne métallique et le cas échéant de l'enveloppe externe métallique sont réalisées par mise en forme des premier et second feuillards par une technique d'hydroformage.

Selon un autre mode de réalisation de l'invention, les ondulations de l'enveloppe interne métallique et le cas échéant de l'enveloppe externe métallique sont réalisées par une technique de déformation des premier et second feuillards dans le domaine superplastique.

Selon encore un autre mode de réalisation de l'invention, les ondulations de l'enveloppe interne métallique et le cas échéant de l'enveloppe externe métallique sont réalisées par mise en forme des premier et second feuillards par une technique d'emboutissage ou de pliage.

Lorsque les ondulations sont réalisées par action sur des feuillards plans, il est possible de prendre en compte par le calcul les déformations des sections des ondulations résultant de la mise en conformation subséquente des enveloppes interne et externe pour leur faire prendre la forme de la chambre de combustion et réaliser l'opération d'assemblage et de soudage.

Selon une autre variante de réalisation,les ondulations de l'enveloppe interne métallique et le cas échéant de l'enveloppe externe métallique sont réalisées par une technique de déformation des premier et second feuillards après conformation de ceux-ci en demi éléments de révolution limités par un plan diamétral ou de secteurs cylindriques, coniques ou ogivaux.

On assemble l'enveloppe interne ondulée et l'enveloppe externe en effectuant un soudage localisé à l'aide de l'une des techniques suivantes : soudage laser, soudage par diffusion, soudage micro-TIG, brasage.

Les finitions des cotés et de l'état de surface de la paroi interne du revêtement interne sont obtenus par au moins l'une des techniques suivantes : usinage chimique et opération de ragréage par pâte abrasive sous pression.

Le procédé selon l'invention est particulièrement adapté à la réalisation de structures de parois de chambre de combustion à circuits de refroidissement parallèles multiples, par la mise en oeuvre de plusieurs ensembles de refroidissement constitués à partir d'enveloppes métalliques soudées les unes aux autres.

Ainsi, selon un mode particulier de réalisation le procédé de fabrication selon l'invention consiste à former et interposer entre l'enveloppe externe et le revêtement externe un premier ensemble de refroidissement ou de réchauffement supplémentaire comprenant une enveloppe interne métallique ondulée supplémentaire et une enveloppe externe métallique supplémentaire réalisées et assemblées selon les étapes a) à c) susmentionnées pour former des première et deuxième séries de passages supplémentaires alternés pour le passage d'au moins un fluide de refroidissement ou de réchauffement, à assembler et souder en outre localement, l'enveloppe interne ondulée supplémentaire et l'enveloppe externe et à former le revêtement externe sur la paroi externe de l'enveloppe externe supplémentaire au lieu de la paroi externe de l'enveloppe externe.

Selon un autre mode particulier de réalisation, le procédé de fabrication selon l'invention consiste à former et interposer entre l'enveloppe externe et le revêtement externe plusieurs ensembles de refroidissement ou de réchauffement supplémentaires comprenant chacun une enveloppe interne métallique ondulée supplémentaire et une enveloppe externe métallique supplémentaire réalisées et assemblées selon les étapes a) à c) susmentionnées pour former au sein de chaque ensemble de refroidissement ou de réchauffement supplémentaire des première et deuxième séries de passages supplémentaires alternés pour le passage d'au moins un fluide de refroidissement ou de réchauffement, à assembler et souder en outre localement i) l'enveloppe externe et l'enveloppe interne ondulée supplémentaire de l'ensemble de refroidissement ou de réchauffement supplémentaire le plus interne et, ii) l'enveloppe interne ondulée supplémentaire de chacun des autres ensembles de refroidissement ou de réchauffement supplémentaires et l'enveloppe externe supplémentaire de l'ensemble de refroidissement ou de réchauffement supplémentaire situé de façon immédiatement adjacente et à former le revêtement externe sur la paroi externe de l'enveloppe externe supplémentaire de l'ensemble de refroidissement ou de réchauffement supplémentaire le plus extérieur et non sur la paroi externe de l'enveloppe externe.

Il est en outre possible de former des ondulations sur chaque enveloppe externe supplémentaire, avant son assemblage, pour constituer une structure de passages supplémentaires de refroidissement ou de réchauffement en nid d'abeille.

L'invention concerne également les chambres de combustion obtenues selon les divers modes de réalisation du procédé de fabrication susmentionné.

### Brève description des dessins

D'autres caractéristiques et avantages de l'invention ressortiront de la description détaillée de modes particuliers de réalisation, donnés à titre d'exemples, en référence aux dessins annexés, sur lesquels :
- la figure 1 est une vue schématique en coupe axiale d'une partie de chambre de combustion réalisée conformément à l'invention,
- la figure 2 est une vue en coupe selon le plan A-A de la figure 1 d'une partie de la paroi de la chambre de combustion de la figure 1, selon un premier mode particulier de réalisation à enveloppe interne ondulée et enveloppe externe lisse,
- la figure 3 est une vue en coupe selon le plan A-A de la figure 1 d'une partie de la paroi de la chambre de combustion de la figure 1, selon un second mode particulier de réalisation à enveloppe interne ondulée et enveloppe externe ondulée,
- la figure 4 est une vue agrandie d'une partie de la figure 2,
- la figure 5 est une vue en coupe analogue à celle de la figure 4, mais montre un exemple de paroi de chambre de combustion comprenant deux paires d'enveloppes successives empilées définissant plusieurs circuits de canaux de refroidissement,
- la figure 6 est une vue en coupe analogue à celle de la figure 4, mais montre un exemple de paroi de chambre de combustion comprenant trois paires d'enveloppes successives empilées définissant encore un plus grand nombre de circuits de canaux de refroidissement,
- la figure 7 est une vue en coupe analogue à celle de la figure 6, mais montre un exemple de paroi de chambre de combustion comprenant trois paires d'enveloppes successives empilées toutes munies d'ondulations pour définir une structure de canaux de refroidissement en nid d'abeille.
- les figures 8 à 20 montrent des sections analogues à celles des figures 2 et 3, mais sans les revêtements interne et externe, de parties d'assemblages d'une enveloppe interne et d'une enveloppe externe, utilisables dans une paroi de chambre de combustion selon l'invention, et présentant diverses variantes de forme,
- la figure 21 est une vue en coupe selon le plan XXI-XXI de la figure 22 d'une partie de paroi de chambre de combustion selon l'invention en cours de fabrication avec un mandrin interne, et
- la figure 22 est une vue en demi-coupe axiale de la paroi de la chambre de combustion de la figure 21 en cours de fabrication avec un mandrin interne,

### Description détaillée de modes particuliers de réalisation

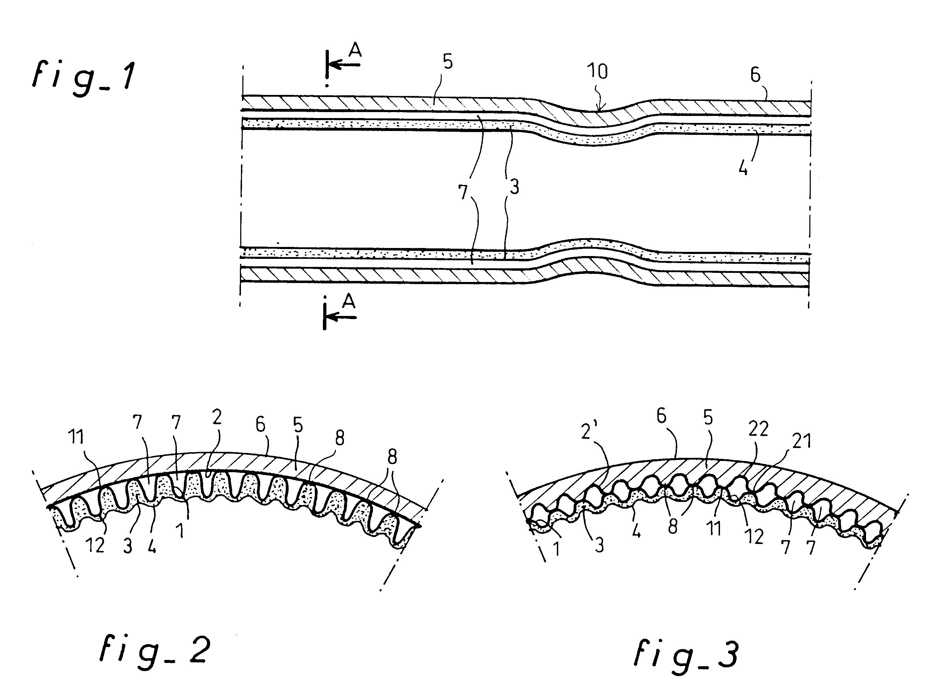

On voit sur la figure 1 une partie de chambre de combustion de moteur-fusée présentant une partie en forme de tuyère avec une partie rétrécie ou col 10. La paroi de la chambre de combustion incorpore des canaux 7 destinés à être parcourus par exemple par un fluide de refroidissement qui peut être l'un des ergols utilisés pour l'alimentation de la chambre de combustion et stockés à basse température.

La paroi de la chambre de combustion présente un revêtement externe 5 avec une face externe 6, qui peut être réalisé notamment par plasmaformage ou par un cerclage de matériaux composites ou céramiques ou encore par électro déposition d'un matériau métallique, et un revêtement interne 3 avec une face interne 4, qui est réalisé par la technologie de la métallurgie des poudres métalliques ou non métalliques.

La surface interne 4 du revêtement interne 3 peut être lisse ou de préférence gaufrée pour faciliter les échanges de chaleur.

Le choix du matériau constituant le revêtement interne 3 est particulièrement important car ce revêtement est soumis à un flux gazeux à haute température, de l'ordre de 3000°K. Le matériau du revêtement interne 3 doit ainsi présenter une excellente conductibilité thermique pour assurer un très bon échange thermique et une excellente tenue vis-à-vis des gaz éjectés.

Le procédé de fabrication selon la présente invention qui autorise une réalisation commode du revêtement interne 3 par la technologie de la métallurgie des poudres permet de choisir un matériau, métal pur ou alliage, ou mélange de matériaux céramiques, en prenant en compte particulièrement ces critères de conductibilité, de stabilité chimique et de résistance à l'érosion vis-à-vis des gaz chauds, et permet de retenir des matériaux qui sont par exemple difficiles à usiner et sont ordinairement exclus dans le cas de la fabrication de chambres de combustion.

La mise en oeuvre de la technique de la métallurgie des poudres pour la réalisation du revêtement interne 3 est en particulier intéressante pour la réalisation de pièces de petites ou moyennes dimensions de forme complexe dont l'usinage est problématique, ainsi que pour réaliser des parois poreuses.

Comme cela est bien connu, la technique de la métallurgie des poudres nécessite la fabrication de conteneurs spécifiques. Le procédé de fabrication selon l'invention permet de s'affranchir de cette contrainte et utilise une partie de conteneur qui est constituée directement par une partie du produit fini que constitue la paroi de la chambre de combustion, à savoir une des deux enveloppes qui délimitent les canaux de refroidissement

Le processus de fabrication d'une paroi ou d'un élément de paroi selon l'invention sera mieux compris en référence aux figures 2 à 4 qui montrent la structure d'une paroi et notamment les éléments qui définissent les canaux 7.

Selon l'invention on évite l'usinage de canaux et l'ensemble du circuit de refroidissement ou de réchauffement incorporé dans la paroi est réalisé de façon monobloc à partir de feuillards assemblés par soudage ou brasage.

Un premier feuillard plan ou tubulaire de base est d'abord mis en forme par hydroformage et/ou déformation super plastique, emboutissage ou pliage pour constituer une enveloppe interne 1 munie d'ondulations 11, 12.

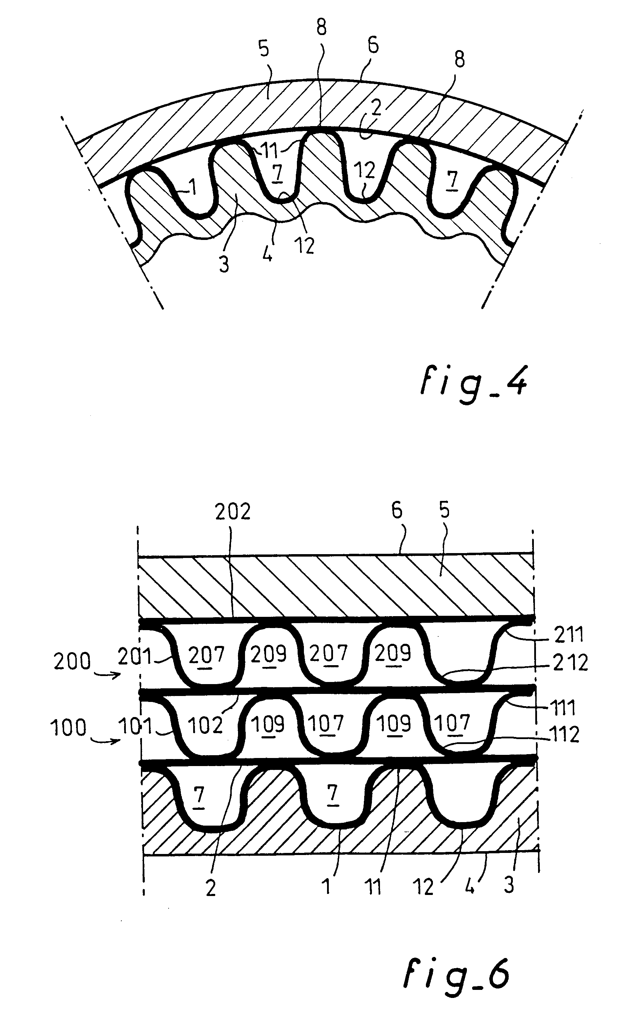

Un second feuillard plan ou tubulaire de base peut être mis en forme de la même façon pour constituer une enveloppe externe ondulée 2′ (fig 3) ou peut ne subir qu'un simple roulage pour former une enveloppe externe lisse 2 (fig 2 et 4).

Les deux feuillards mis en forme sont ensuite mis en contact l'un avec l'autre et sont soudés ou brasés l'un à l'autre selon des zones de soudage 8 disposées longitudinalement entre les espaces libres définissant les canaux 7.

Le choix de feuillards pour définir les canaux de refroidissement 7 permet de choisir des matériaux présentant d'excellentes caractéristiques avec notamment des propriétés de capacité de déformation dans le domaine super plastique.

L'épaisseur du feuillard devant servir à constituer l'enveloppe interne 1 peut facilement être optimisée pour assurer un bon compromis entre les capacités d'échange thermiqueet de tenue mécanique du matériau choisi pour le feuillard délimitant les canaux et le matériau choisi pour le revêtement interne 3, lequel contribue à la rigidité de l'ensemble.

Les enveloppes interne 1 et externe 2 une fois superposées et mises en contact sont soudées par exemple par soudage laser ou micro-TIG (soudage en atmosphère inerte avec électrode réfractaire) qui permettent un soudage aisé de tôles de faible épaisseur. D'autres techniques de soudage sont toutefois utilisables, telles que le soudage par diffusion ou le brasage.

Les enveloppes interne 1 et externe 2 peuvent être réalisées en un même matériau métallique ou au contraire être constituées de deux matériaux métalliques différents,par exemple, par un feuillard bimétallique, ou par un feuillard revêtu d'un dépôt, selon les applications envisagées.

La formation d'ondulation sur les feuillards plans peut encore être effectuée par emboutissage. D'une manière générale, les déformations des sections des canaux 7 résultant de la conformation des plaques ondulées 1, 2′ pour réaliser une structure de révolution, sont calculables à l'avance de sorte qu'il est possible de réaliser des canaux de forme et de dimension précises et notamment d'assurer la réalisation de canalisations de refroidissement 7 de sections évolutives.

Il est toutefois également possible de former les ondulations 11, 12 sur l'enveloppe interne 1 ou des ondulations 21, 22 sur l'enveloppe externe 2′ après que celles-ci ont été mises sous la forme de demi-coquilles limitées par un plan diamétral, ou des secteurs cylindriques, ou coniques ou ogivaux correspondant à la forme définitive de la chambre de combustion.

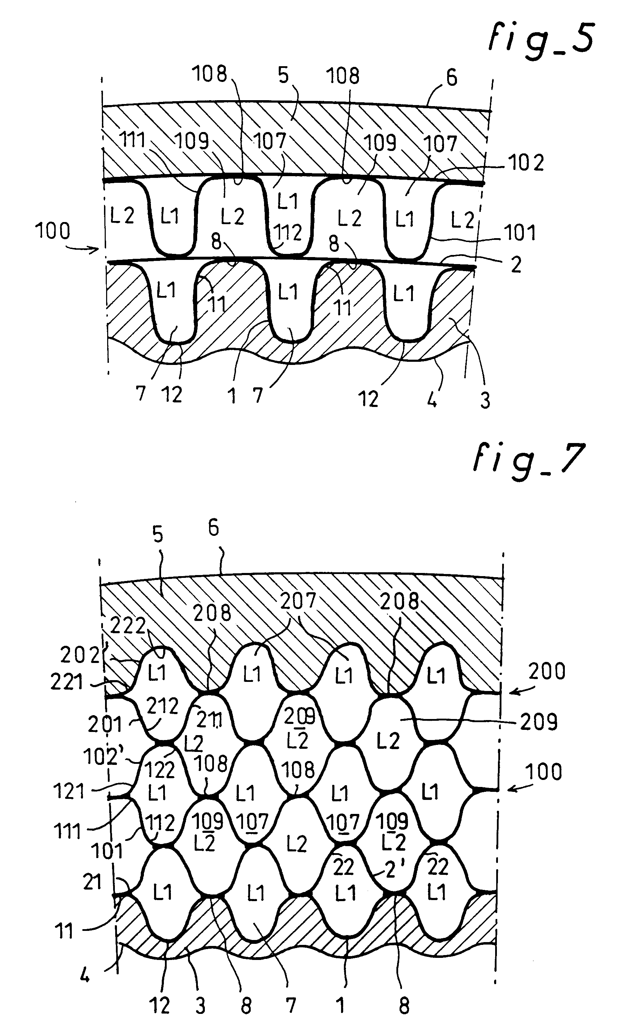

Lors de l'opération de soudage entre les enveloppes interne 1 et externe 2 ou 2′, il n'est pas impératif que l'étanchéité entre canaux adjacents 7 soit rigoureuse si un seul type de liquide de refroidissement ou de réchauffement est utilisé dans l'ensemble du circuit échangeur de chaleur. Toutefois, l'invention permet également la mise en oeuvre d'au moins deux fluides différents dans deux réseaux de canaux différents comme cela sera décrit plus loin en référence aux figures 5 à 7. Dans ce cas, la réalisation des étanchéités au niveau des cordons de soudure doit naturellement être rigoureuse.

Les tores d'alimentation et d'évacuation en fluide de refroidissement, non représentés sur les dessins, sont soudés directement sur les enveloppes 1, 2, ou 2′ qui délimitent les canaux, et contribuent également à accroître la rigidité de l'ensemble.

Le revêtement externe 5 de la chambre de combustion peut être réalisé de façon simple par exemple par plasmaformage.

Le plasmaformage peut en effet s'appliquer directement sur le produit du fait de la technique de réalisation des canaux 7 qui offre sur la partie externe, par l'enveloppe externe 2, 2′, une surface métallique continue capable de supporter des températures de l'ordre de 200°C nécessaires pour favoriser l'adhérence du dépôt plasma pendant l'opération de projection. Dans un tel contexte, il n'est pas nécessaire de créer avant projection plasma une couche d'accrochage spécifique continue et métallique, comme cela serait le cas avec une paroi dans laquelle les canaux de refroidissement seraient réalisés par usinage.

Par ailleurs, le revêtement externe 5 peut être constitué par une couche d'alliage dont la composition peut être évolutive au sein de l'épaisseur de la couche, ce qui permet globalement de réduire l'épaisseur du revêtement externe 5 et d'alléger l'ensemble du produit.

Lors de la réalisation du revêtement interne 3 par la technologie de la métallurgie des poudres, le conteneur externe est constitué directement par l'enveloppe ondulée interne 1 tandis que le conteneur interne est constitué par un mandrin ou noyau soluble ou par des enclumes amovibles. De cette manière, le revêtement interne peut être facilement appliqué sur l'enveloppe interne 1 et rendu adhérent à celle-ci après l'application d'un cycle de compaction isostatique à chaud.

Comme on l'a représenté notamment sur les figures 2 et 4, l'épaisseur du revêtement interne 3 peut être réduite en face des canaux 7 pour faciliter les échanges thermiques, et peut par exemple descendre jusqu'à 0,8 mm dans ces zones longitudinales superposées aux canaux 7 tout en étant plus importante dans les zones en creux définies par les parties 11 des ondulations de l'enveloppe 1 et pouvant atteindre alors plusieurs centimètres, par exemple 5 cm.

Le revêtement interne 3 peut encore faire l'objet d'un frittage poreux, qui améliore les échanges thermiques, dans la mesure où la nature du fluide qui pénètre dans ce revêtement interne 3 reste compatible avec celle des feuillards constituant les enveloppes 1 et 2.

La paroi interne 4 du revêtement interne 3 peut être lisse et régulière (Fig 6) ou au contraire ondulée, comme représenté sur les figures 2 à 5 et 7, pour accroître les échanges thermiques.

D'une manière générale, le procédé de fabrication selon l'invention permet de choisir dans un éventail très large les matériaux constituant aussi bien le revêtement interne 3 que le revêtement externe 5.

Le conteneur interne utilisé temporairement pour réaliser le revêtement interne 3, qui définit pour l'essentiel la forme de la paroi interne 4, est réalisé selon la technologie du noyau soluble, c'est-à-dire est éliminé par dissolution chimique sélective ou selon la technologie des enclumes amovibles pour mettre à nu le matériau choisi pour fabriquer le revêtement interne 3. Ces technologies permettent d'obtenir directement aussi bien des formes simples, lisses, que des formes complexes, gaufrées par exemple, qui seraient difficilement réalisables par usinage classique.

Un usinage chimique et/ou une opération de ragréage par pâte abrasive sous pression permettent de réaliser les finitions des cotes et de l'état de surface de la face interne 4 du revêtement interne 3. Lors d'une opération de ragréage par pâte abrasive sous pression, la pâte circule sur la pièce alternativement dans deux sens opposés, grâce à deux pistons placés de part et d'autre de cette pièce. S'il y a lieu, celle-ci est enfermée dans une boîte étanche.

Le revêtement externe 5, qui est formé directement sur l'enveloppe externe 2, 2′ qui est elle-même régulière (fig 2) ou ondulée (fig 3), peut être réalisé par d'autres techniques que le plasmaformage. Ainsi, à titre de variante, le revêtement externe 2, 2′ peut être réalisé par cerclage ou bobinage à l'aide d'un matériau composite ou encore par électrodéposition.

A titre d'exemple, les feuillards servant à la réalisation des enveloppes 1, 2, 2′ peuvent être en Inconel 625 et présenter des épaisseurs de l'ordre de 0,15 à 0,2 mm.

Le revêtement externe 5 peut présenter des épaisseurs par exemple de l'ordre de 2 à 4 mm.

Les ondulations des enveloppes 1, 2′ peuvent présenter par exemple une profondeur de l'ordre de 3 mm et une largeur de 1,5 mm, mais le choix des dimensions peut s'effectuer dans une relativement large plage de valeurs et atteindra plusieurs centimètres pour les ensembles importants.

Dans le cas du mode de réalisation de la figure 3, pour lequel les deux enveloppes interne 1 et externe 2′ sont ondulées, la profondeur des ondulations peut naturellement être réduite de moitié par rapport au mode de réalisation de la figure 2 pour lequel seule l'enveloppe interne 1 est gaufrée.

On décrira maintenant en référence aux figures 5 à 7 des modes de réalisation particuliers pour lesquels plusieurs circuits échangeurs de chaleur réalisés par le procédé selon l'invention sont empilés entre le revêtement interne 3 et le revêtement externe 5.

La figure 5 montre une portion de paroi dans laquelle il est interposé entre l'enveloppe externe 2 et le revêtement externe 5 un ensemble supplémentaire de refroidissement ou réchauffement constitué par l'assemblage d'une enveloppe métallique interne ondulée supplémentaire 101, qui peut être de forme identique ou non à celle de l'enveloppe interne 1, et d'une enveloppe métallique externe supplémentaire 102, qui peut être de forme identique ou non à celle de l'enveloppe externe 2. Les enveloppes supplémentaires 101 et 102 peuvent être fabriquées selon la même technique que les enveloppes 1 et 2. Toutefois, lors de l'assemblage, il est naturellement possible de procéder au soudage successif des enveloppes 1, 2, 101 et 102 ou des enveloppes 102, 101, 2 et 1. Les revêtements interne 3 et externe 5 sont formés respectivement sur l'enveloppe interne 1 et l'enveloppe externe supplémentaire 102 comme dans le cas des modes de réalisation des figures 2 à 4.

Sur la figure 5 on a représenté des enveloppes internes 1, 101 ondulées avec des parties courbes 11, 12 et 111, 112 tandis que les enveloppes externes 2, 102, présentent une courbure régulière, mais ces dernières pourraient naturellement également être ondulées.

Les enveloppes supplémentaires 101, 102 définissent des première et deuxième séries de passages supplémentaires alternés 107, 109 qui peuvent servir au passage de deux fluides distincts L1, L2 ou d'un seul type de fluide.

Le nombre de paires d'enveloppes empilées définissant des canaux de refroidissement ou de réchauffement peut être supérieur à 2. Ainsi, les figures 6 et 7 montrent des parois de chambre de combustion à circuits de refroidissement parallèles multiples 100, 200 comprenant trois paires d'enveloppes interne et externe 1, 2 ou 2′; 101, 102 ou 102′; 201, 202 ou 202′ formées à partir de feuillards plans et assemblées par soudage de la façon précédemment décrite.

Les enveloppes externes supplémentaires 102, 202 ou 102′, 202′ peuvent être tout à fait analogues aux enveloppes externes régulières 2 ou ondulées 2′ précédemment décrites, avec pour les enveloppes ondulées 102′, 202′ (fig 7) des portions successives de concavités opposées 121, 122; 221, 222. De même , les enveloppes internes supplémentaires 101, 201 peuvent être tout à fait analogues aux enveloppes internes 1 précédemment décrites avec des portions successives de concavités opposées 111, 112; 211, 212. Les canaux 7, 107, 207 peuvent être parcourus par un premier liquide de refroidissement ou de réchauffement L1 et les canaux 109, 209 par un second liquide de refroidissement ou de réchauffement L2, dans la mesure où les cordons de soudure 8, 108, 208 entre les différentes enveloppes sont réalisés de façon étanche, mais un seul type de liquide L1 pourrait aussi être utilisé. Il est de plus possible de laisser certains canaux vides, par exemple les canaux 109, 209.

Par ailleurs, dans les divers modes de réalisation décrits, il est possible de remplir tout ou partie des canaux 7, 107, 207, 109, 209 ménagés entre les différentes enveloppes 1, 2, 2′, 101, 102, 102′, 201, 202, 202′ par des granulés ou des poudres génératrices de réactions catalytiques dans le fluide de refroidissement ou de réchauffement, de façon à accroître les échanges thermiques.

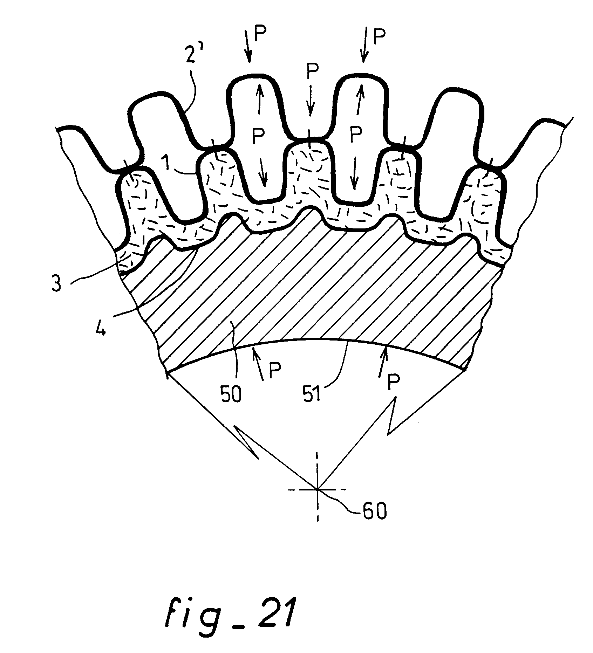

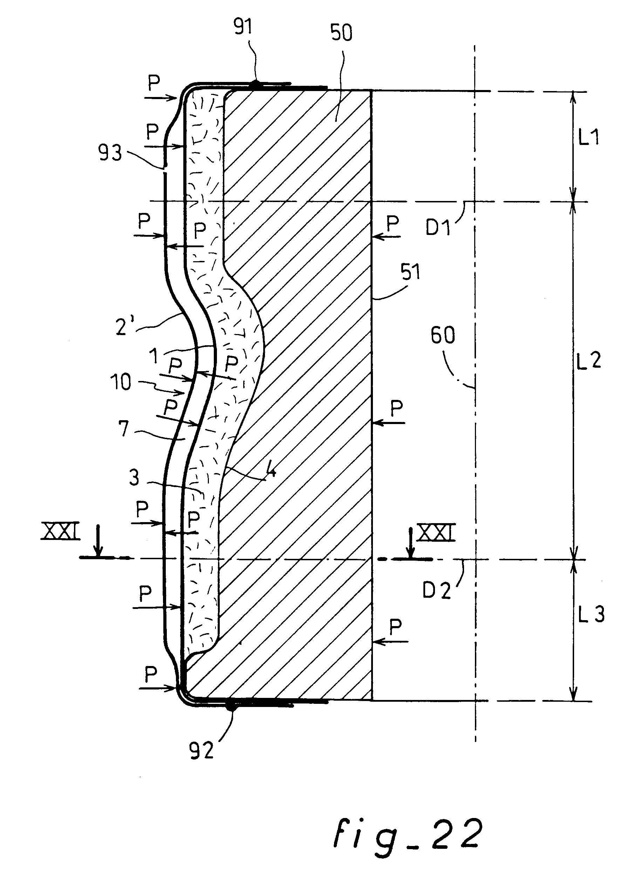

Les figures 21 et 22 montrent plus particulièrement une étape du procédé selon l'invention au cours de laquelle on forme un revêtement interne 3 sur la paroi interne de l'enveloppe interne ondulée 1 par la technique de la métallurgie des poudres en utilisant un conteneur pour le matériau en poudre destiné à constituer le revêtement interne 3, la formation de ce revêtement interne s'effectuant par application d'un cycle de compaction isostatique à chaud.

La paroi externe du conteneur est constituée directement par le feuillard ou enveloppe interne 1 tandis que la paroi interne du conteneur est constituée par une enclume 50 non consommable amovible qui est récupérable après chaque opération de compaction isostatique à chaud, ou bien par un mandrin ou noyau soluble 50, c'est-à-dire par un élément non récupérable qui subit une dissolution chimique après une opération de compaction isostatique à chaud.

Sur les figures 21 et 22, l'axe de la chambre de combustion est repéré par la référence 60. La partie utile de la chambre présente une longueur L2 définie par deux plans de découpe D1 et D2 au niveau desquels une découpe est effectuée après l'opération de formation du revêtement interne 3. Le conteneur définit ainsi pendant l'opération de compaction isostatique à chaud une surlongueur de tête L1 et une surlongueur de pied L3. Les feuillards métalliques constituant les enveloppes interne 1 et externe 2′ de la paroi à fabriquer sont repliés sur les faces transversales externes de l'élément 50 formant mandrin ou enclume et sont soudés sur cet élément 50 en des zones 91, 92.

Sur les figures 21 et 22, les flèches 8 désignent la pression isostatique qui s'exerce sur l'enceinte de compaction pendant l'opération de compaction isostatique à chaud. Cette pression P s'exerce aussi bien sur la face interne 51 de l'élément 50 que sur les feuillards constituant les enveloppes 1 et 2′.

Au moins un trou 93 est percé dans l'enveloppe externe 2′ au niveau de chaque canal 7, afin que seule l'enveloppe interne 1 subisse une déformation lorsque la pression P s'exerce pour compacter le revêtement interne 3 formé à partir de poudres, tandis que l'enveloppe externe 2′ peut ne pas s'effondrer sur l'enveloppe interne 1 du fait de l'équilibre des pressions entre l'intérieur du passage 7 et la face externe de l'enveloppe externe 2′.

A titre d'exemple de matériaux convenant pour la réalisation du revêtement interne 3 en métallurgie des poudres, on peut citer, le cuivre, l'argent, un mélange de cuivre et d'argent, un mélange de poudres métalliques comprenant par exemple cuivre, nickel, tungstène avec dispersion d'oxydes tels que YO₂, SiO₂, Al₂O₃, le tungstène, le platine, le nickel et des alliages à base de nickel tels que N18, Astroloy, inco 625, inco 718, les céramiques.

Des matériaux adaptés pour la réalisation du revêtement externe 5 par plasmaformage sont par exemple le titane et ses alliages, le nickel et ses alliages, des alliages du type M Cr AlY ou MCo Cr Al Y où M désigne le nickel ou le cobalt.

En cas de cerclage, celui-ci peut être réalisé avec des matériaux composites tels que SiC, ou carbone-carbone, ou être constitué par des bobinages de fibres imprégnées.

Un grand choix de matériaux métalliques est possible pour les feuillards constituant les enveloppes interne 1 et externe 2, 2′ ainsi que les enveloppes supplémentaires éventuelles 101, 201, 102, 202, 102′, 202′.

A titre d'exemples d'alliages adaptés pouvant présenter un comportement superplastique, on peut citer :
- des alliages de cuivre tel que Cu-(7 à 10P), présentant un comportement superplastique entre 683 et 873°C,
- des alliages de nickel tel que Ni-34,9Cr-26,2Fe-0,58Ti, présentant un comportement superplastique entre 1068 et 1128°C,
- des alliages de titane, tel que Ti-8Mn, présentant un comportement superplastique entre 853 et 1173°C,
- Co-10Al, présentant un comportement superplastique vers 1473°C,
- Zr-2,5Nb présentant un comportement superplastique entre 900 et 1100°C)
- W-(15 à 30) Re, présentant un comportement superplastique vers 2273°C.

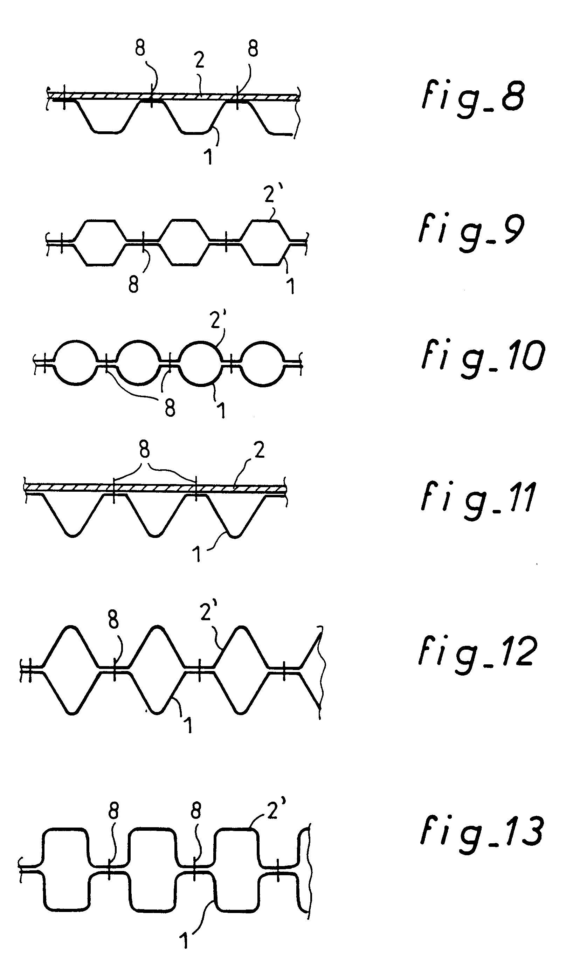

Les différentes enveloppes 1, 2, 2′, 101, 102, 202, 102′, 202′ destinées à définir, après mise en forme et assemblage par exemple par soudage ou brasage en des zones 8, les différents canaux de circulation de fluide 7, 107, 207, 109, 209, peuvent présenter des formes très variées. Diverses configurations possibles sont représentées sur les figures 8 à 20, en prenant comme exemple un simple assemblage d'une enveloppe interne 1 et d'une enveloppe externe 2 ou 2′. Naturelllement ces configurations peuvent s'appliquer de la même manière à deux enveloppes supplémentaires telles que 101, 102 ou 102′ par exemple.

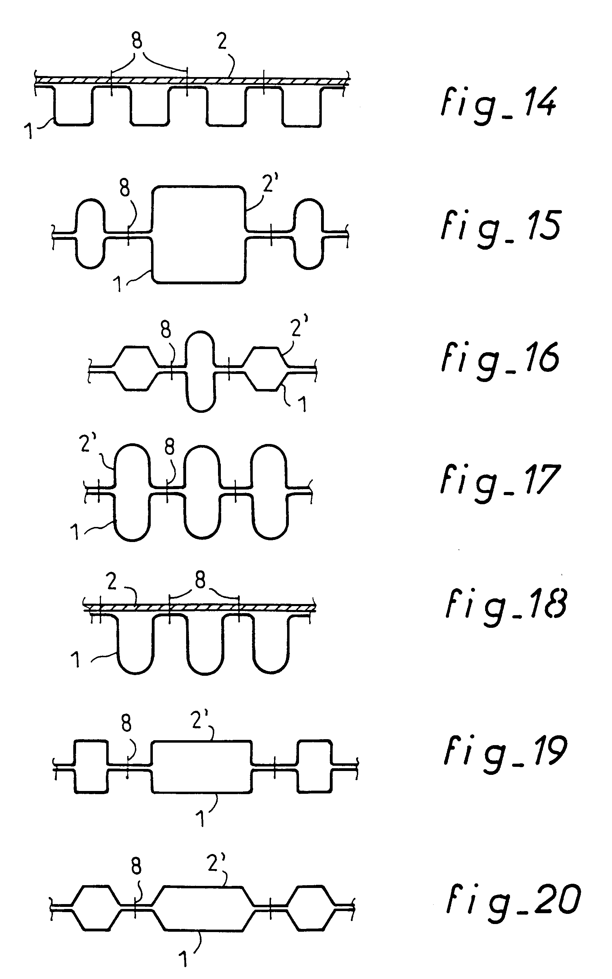

On voit sur les figures 8, 9 et 20 des ondulations à profil trapézoïdal, sur les figures 10, 17, 18 des ondulations à profil courbe, sur les figures 11, 12 des ondulations à profil triangulaire, sur les figures 13, 14 et 19 des ondulations à profil rectangulaire, sur les figures 15 et 16 des ondulations à profils mixtes, avec par exemple alternance d'ondulations courbes et d'ondulations à profil rectangulaire ou trapézoïdal et sur les figures 19 et 20 des ondulations de profil homogène (respectivement rectangulaire et trapézoïdal) mais avec des dimensions différentes. Les diverses configurations représentées ne sont naturellement pas limitatives.

## Revendications

1. Procédé de fabrication de paroi de chambre de combustion à canaux essentiellement longitudinaux, notamment pour moteur-fusée, selon lequel on assemble des premier (1) et deuxième (2) feuillards métalliques soudés l'un à l'autre et conformés de manière à présenter des ondulations (11, 12; 21, 22) entre les cordons de soudure (8), de manière à ménager des passages (7) pour un fluide de refroidissement ou de rechauffement,
comprenant les étapes suivantes :
**a)** réaliser une enveloppe interne métallique ondulée (1) par déformation d'un premier feuillard plan ou tubulaire,
**b)** réaliser une enveloppe externe métallique (2) à partir d'un second feuillard plan ou tubulaire,
**c)** assembler et souder localement l'enveloppe interne ondulée (1) et l'enveloppe externe (2),
et étant caractérisé par les étapes suivantes:
**d)** former un revêtement interne (3) sur la paroi interne de l'enveloppe interne ondulée (1) par la technique de la métallurgie des poudres en utilisant un conteneur pour le matériau destiné à constituer le revêtement interne (3), la paroi externe dudit conteneur étant constituée directement par la paroi interne de ladite enveloppe interne ondulée (1) et la paroi interne dudit conteneur étant réalisée à partir d'enclumes non consommables amovibles, ou à partir d'un noyau soluble éliminé par dissolution chimique sélective après formation du revêtement interne (3) par application d'un cycle de compaction isostatique à chaud et
**e)** former un revêtement externe (5) sur la paroi externe de l'enveloppe externe (2).

2. Procédé selon la revendication 1, caractérisé en ce que le revêtement externe (5) est formé directement sur la paroi externe de l'enveloppe externe (2) par plasmaformage de poudres métalliques ou céramiques.

3. Procédé selon la revendication 2, caractérisé en ce que le revêtement externe (5) déposé par plasma formage est constitué par une couche d'alliage dont la composition est évolutive au sein de l'épaisseur de cette couche d'alliage.

4. Procédé selon l'une quelconque des revendications 1 à 3, caractérisé en ce que l'on réalise une enveloppe externe métallique (2) sans ondulation par simple roulage dudit second feuillard.

5. Procédé selon l'une quelconque des revendications 1 à 3, caractérisé en ce que l'on réalise une enveloppe externe métallique (2′) présentant des ondulations, par déformation dudit second feuillard.

6. Procédé selon l'une quelconque des revendications 1 à 5, caractérisé en ce que les ondulations de l'enveloppe interne métallique (1) et le cas échéant de l'enveloppe externe métallique (2′) sont réalisées par mise en forme des premier et second feuillards par une technique d'hydroformage.

7. Procédé selon l'une quelconque des revendications 1 à 5, caractérisé en ce que les ondulations de l'enveloppe interne métallique (1) et le cas échéant de l'enveloppe externe métallique (2′) sont réalisées par une technique de déformation des premier et second feuillards dans le domaine superplastique.

8. Procédé selon l'une quelconque des revendications 1 à 5, caractérisé en ce que les ondulations de l'enveloppe interne métallique (1) et le cas échéant de l'enveloppe externe métallique (2′) sont réalisées par mise en forme des premier et second feuillards par une technique d'emboutissage ou de pliage.

9. Procédé selon l'une quelconque des revendications 1 à 5, caractérisé en ce que les ondulations de l'enveloppe interne métallique (1) et le cas échéant de l'enveloppe externe métallique (2′) sont réalisées par une technique de déformation des premier et second feuillards après conformation de ceux-ci en demi éléments de révolution limités par un plan diamétral, ou de secteurs cylindriques, coniques ou ogivaux.

10. Procédé selon l'une quelconque des revendications 1 à 9, caractérisé en ce que l'on assemble l'enveloppe interne ondulée (1) et l'enveloppe externe (2) en effectuant un soudage localisé à l'aide de l'une des techniques suivantes : soudage laser, soudage par diffusion, soudage micro-TIG, brasage.

11. Procédé selon l'une quelconque des revendications 1 à 10, caractérisé en ce que l'on réalise par la métallurgie des poudres à l'aide de la technologie du noyau soluble ou de celle d'enclumes amovibles une paroi interne (4) du revêtement interne (3) qui présente une forme gaufrée, ondulée ou lisse.

12. Procédé selon l'une quelconque des revendications 1 à 11, caractérisé en ce que les finitions des cotes et l'état de surface de la paroi interne (4) du revêtement interne (3) sont obtenus par au moins l'une des techniques suivantes : usinage chimique et opération de ragréage par pâte abrasive sous pression.

13. Procédé selon l'une quelconque des revendications 1 et 4 à 12, caractérisé en ce que le revêtement externe (5) est formé directement sur la paroi externe de l'enveloppe externe (2) par cerclage ou bobinage à l'aide d'un matériau composite.

14. Procédé selon la revendication 1, ou l'une quelconque des revendications 4 à 12, caractérisé en ce que le revêtement externe (5) est formé directement sur la paroi externe de l'enveloppe externe (2) par électro-déposition.

15. Procédé selon l'une quelconque des revendications 1 à 14, caractérisé en ce qu'il consiste à former et interposer en outre entre l'enveloppe externe (2) et le revêtement externe (5) un premier ensemble de refroidissement ou réchauffement supplémentaire comprenant une enveloppe interne métallique ondulée supplémentaire (101) et une enveloppe externe métallique supplémentaire (102) réalisées et assemblées selon les étapes a) à c) susmentionnées pour former des première et deuxième séries de passages supplémentaires (107, 109) alternés pour le passage d'au moins un fluide de refroidissement ou de réchauffement, à assembler et souder en outre localement, l'enveloppe interne ondulée supplémentaire (101) et l'enveloppe externe (2) et à former le revêtement externe (5) sur la paroi externe de l'enveloppe externe supplémentaire (102) au lieu de la paroi externe de l'enveloppe externe (2).

16. Procédé selon l'une quelconque des revendications 1 à 14, caractérisé en ce qu'il consiste à former et interposer entre l'enveloppe externe (2) et le revêtement externe (5) plusieurs ensembles de refroidissement ou de réchauffement supplémentaires (100, 200) comprenant chacun une enveloppe interne métallique ondulée supplémentaire (101, 201) et une enveloppe externe métallique supplémentaire (102, 202; 102′, 202′) réalisées et assemblées selon les étapes a) à c) susmentionnées pour former au sein de chaque ensemble de refroidissement ou de réchauffement supplémentaire (100, 200) des première et deuxième séries de passages supplémentaires (107, 109; 207, 209) alternés pour le passage d'au moins un fluide de refroidissement ou de réchauffement, à assembler et souder en outre localement i) l'enveloppe externe (2, 2′) et l'enveloppe interne ondulée supplémentaire (101) de l'ensemble de refroidissement ou de réchauffement supplémentaire (100) le plus interne et, ii) l'enveloppe interne ondulée supplémentaire (201) de chacun des autres ensembles de refroidissement ou de réchauffement supplémentaires (200) et l'enveloppe externe supplémentaire (102, 102′) de l'ensemble de refroidissement ou de réchauffement supplémentaire (100) situé de façon immédiatement adjacente et à former le revêtement externe (5) sur la paroi externe de l'enveloppe externe supplémentaire (202, 202′) de l'ensemble de refroidissement ou de réchauffement supplémentaire le plus extérieur, et non sur la paroi externe de l'enveloppe externe (2, 2′).

17. Procédé selon la revendication 15 ou la revendication 16, caractérisé en ce que l'on forme en outre des ondulations (121, 122; 221, 222) sur chaque enveloppe externe supplémentaire (102′, 202′), avant son assemblage, pour constituer une structure de passages supplémentaires de refroidissement ou de réchauffement(107, 109, 207, 209) en nid d'abeille.

18. Procédé selon l'une quelconque des revendications 1 à 17, caractérisé en ce que l'on procéde en outre au remplissage d'au moins une partie des passages (7, 107, 207, 109, 209) ménagés entre les enveloppes interne (1) et externe (2, 2′) et le cas échéant entre les enveloppes interne (101, 201) et externe (102, 202, 102′, 202′) supplémentaires par des granulés ou des poudres génératrices de réactions catalytiques dans le fluide de refroidissement ou de réchauffement.

19. Chambre de combustion obtenue par un procédé selon l'une quelconque des revendications 1 à 18.

## Claims

1. Method of manufacturing a combustion chamber wall having essentially longitudinal channels, in particular for a rocket engine, in which first and second metal sheets (1; 2) are assembled together and welded together and are shaped so as to present corrugations (11, 12; 21, 22) between weld fillets (8) so as to provide passages (7) for a cooling fluid or a heating fluid,
the method comprising the following steps:
**a)** making a corrugated metal inner shell (1) by deforming a first plane or tubular sheet,
**b)** making a metal outer shell (2) from a second plane or tubular sheet,
**c)** assembling the corrugated inner shell (1) and the outer shell (2) together and welding them together locally,
and being characterized by the following steps:
**d)** forming an inner coating (3) on the inside face of the corrugated inner shell (1) by the technique of powder metallurgy using a container for the material that is to constitute the inner coating (3), the outside face of said container being constituted directly by the inside face of said corrugated inner shell (1) and the inside face of said container being made using removable non-consumable sections or a soluble core that is removed by selective chemical dissolving after the inner coating (3) has been formed by applying a hot isostatic compacting cycle and
**e)** forming an outer coating (5) on the outside face of the outer shell (2).

2. Method according to claim 1, characterized in that the outer coating (5) is formed directly on the outside face of the outer shell (2) by plasmaforming using metal or ceramic powder.

3. Method according to claim 2, characterized in that the outer coating (5) deposited by plasmaforming is constituted by a layer of alloy whose composition varies within the thickness of said layer of alloy.

4. Method according to any one of claims 1 to 3, characterized in that the metal outer shell (2) is made without corrugations merely by curving said second sheet.

5. Method according to any one of claims 1 to 3, characterized in that a metal outer shell (2') having corrugations is made by deforming said second sheet.

6. Method according to any one of claims 1 to 5, characterized in that the corrugations of the metal inner shell (1) and of the metal outer shell (2'), if any, are made by shaping the first and second sheets using a hydroforming technique.

7. Method according to any one of claims 1 to 5, characterized in that the corrugations of the metal inner shell (1) and of the metal outer shell (2), if any, are made by a technique of deforming the first and second sheets in the superplastic region.

8. Method according to any one of claims 1 to 5, characterized in that the corrugations of the metal inner shell (1) and of the metal outer shell (2'), if any, are made by forming the first and second sheets by a technique of stamping or folding.

9. Method according to any one of claims 1 to 5, characterized in that the corrugations of the metal inner shell (1) and of the metal outer shell (2'), if any, are made by a technique of deforming the first and second sheets after they have been shaped into the form of circularly symmetrical half-shell components that are delimited by a diametral plane, or in the form of sectors of cylinders, cones, or bullet-shapes.

10. Method according to any one of claims 1 to 9, characterized in that the corrugated inner shell (1) and the outer shell (2) are assembled together by local welding using one of the following techniques: laser welding; diffusion welding; micro-TIG welding; brazing.

11. Method according to any one of claims 1 to 10, characterized in that an inside face (4) that is embossed, corrugated, or smooth is formed on the inner coating (3) by powder metallurgy using the technique of a soluble core or the technique of removable sections.

12. Method according to any one of claims 1 to 11, characterized in that the dimensions and the surface state of the inside face (4) of the inner coating (3) are finished by at least one of the following techniques: chemical machining and a finishing operation using an abrasive paste under pressure.

13. Method according to any one of claims 1 and 4 to 12, characterized in that the outer coating (5) is formed directly on the outside face of the outer shell (2) by circumferential banding or by winding using a composite material.

14. Method according to claim 1, or according to any one of claims 4 to 12, characterized in that the outer coating (5) is formed directly on the outside face of the outer shell (2) by electroplating.

15. Method according to any one of claims 1 to 14, characterized in that it further consists in forming and interposing between the outer shell (2) and the outer coating (5) a first additional cooling or heating assembly comprising an additional corrugated metal inner shell (101) and an additional metal outer shell (102) made and assembled together in accordance with above-mentioned steps a) to c) for forming first and second series of alternating additional passages (107, 109) for passing at least one cooling fluid or heating fluid, in further assembling together and locally welding together the additional corrugated inner shell (101) and the outer shell (2), and in forming the outer coating (5) on the outside face of the additional outer shell (102) instead of on the outside face of the outer shell (2).

16. Method according to any one of claims 1 to 14, characterized in that it further consists in forming and interposing between the outer shell (2) and the outer coating (5) a plurality of additional cooling or heating assemblies (100, 200) each comprising an additional corrugated metal inner shell (101, 201) and an additional metal outer shell (102, 202; 102', 202') made and assembled together in accordance with above-mentioned steps a) to c) to form within each additional cooling or heating assembly (100, 200) first and second alternating series of additional passages (107, 109; 207, 209) for passing at least one cooling fluid or heating fluid, in assembling together and locally welding together i) the outer shell (2, 2') and the additional corrugated inner shell (101) of the innermost additional cooling or heating assembly (100) and ii) the additional corrugated inner shell (201) of each of the other additional cooling or heating assemblies (200) and the additional outer shell (102, 102') of the immediately adjacent additional cooling or heating assembly (100), and in forming the outer coating (5) on the outside face of the additional outer shell (202, 202') of the outermost additional cooling or heating assembly, and not on the outside face of the outer shell (2, 2').

17. Method according to claim 15 or claim 16, characterized in that corrugations (121, 122; 221, 222) are additionally formed on each additional outer shell (102', 202') prior to assembling it, thereby constituting a honeycomb structure of additional cooling or heating passages (107, 109, 207, 209).

18. Method according to any one of claims 1 to 17, characterized in that at least some of the passages (7, 107, 207, 109, 209) formed between the inner and outer shells (1; 2, 2') and the additional inner and outer shells (101, 201; 102, 202, 102', 202'), if any, are filled with grains or powders that generate catalytic reactions in the cooling or heating fluid.

19. Combustion chamber obtained by the method according to any one of claims 1 to 18.

## Patentansprüche

1. Herstellungsverfahren für eine Brennkammerwand mit im wesentlichen longitudinalen Kanälen, insbesondere für ein Raketentriebwerk, bei dem ein erstes (1) und zweites metallisches Band (2) zusammengebaut werden, die miteinander verschweißt und so geformt sind, daß sie Wellen (11, 12; 21, 22) zwischen den Schweißnähten (8) aufweisen, um so Durchgänge (7) für ein Kühl- oder Heizfluid zu bilden, mit den Schritten
a) Herstellen einer gewellten inneren Hülle (1) durch Verformung eines ersten flachen oder rohrförmigen Bandes,
b) Herstellen einer äußeren metallischen Hülle (2) aus einem zweiten flachen oder rohrförmigen Band,
c) Zusammensetzen und lokales Verschweißen der gewellten inneren Hülle (1) und der äußeren Hülle (2)
gekennzeichnet durch folgende Schritte
d) Bilden eines inneren Überzugs (3) an der Innenwand der gewellten inneren Hülle (1) durch Pulvermetallurgietechnik, wobei für das zur Bildung des inneren Überzugs (3) vorgesehene Material ein Behälter verwendet wird, dessen Außenwand direkt von der Innenwand der gewellten inneren Hülle (1) gebildet wird und dessen Innenwand aus wiederverwendbaren entfernbaren Formkörpern oder aus einem löslichen Kern gebildet wird, der nach Bildung des inneren Überzugs (3) durch Anwendung eines isostatischen Heißverdichtungszyklus durch selektives chemisches Lösen entfernt wird, und
e) Bilden eines äußeren Überzugs (5) an der Außenwand der äußeren Hülle (2).

2. Verfahren nach Anspruch 1, dadurch gekennzeichnet, daß der äußere Überzug (5) direkt an der Außenwand der äußeren Hülle (2) durch Plasmaabscheidung von metallischen oder keramischen Pulvern gebildet wird.

3. Verfahren nach Anspruch 2, dadurch gekennzeichnet, daß der durch Plasmaabscheidung gebildete äußere Überzug (5) aus einer Legierungsschicht besteht, deren Zusammensetzung über die Dicke der Legierungsschicht hinweg veränderlich ist.

4. Verfahren nach einem der Ansprüche 1 bis 3, dadurch gekennzeichnet, daß eine äußere metallische Hülle (2) ohne Wellen durch einfaches Aufrollen des zweiten Bandes gebildet wird.

5. Verfahren nach einem der Ansprüche 1 bis 3, dadurch gekennzeichnet, daß eine Wellen aufweisende äußere metallische Hülle (2') durch Verformung des zweiten Bandes gebildet wird.

6. Verfahren nach einem der Ansprüche 1 bis 5, dadurch gekennzeichnet, daß die Wellen der inneren metallischen Hülle (1) und ggf. der äußeren metallischen Hülle (2') durch Formgebung des ersten und zweiten Bandes mit einer Hydroforming-Technik gebildet werden.

7. Verfahren nach einem der Ansprüche 1 bis 5, dadurch gekennzeichnet, daß die Wellen der inneren metallischen Hülle (1) und ggf. der äußeren metallischen Hülle (2') durch ein Verfahren zur Verformung des ersten und zweiten Bandes im superplastischen Bereich gebildet werden.

8. Verfahren nach einem der Ansprüche 1 bis 5, dadurch gekennzeichnet, daß die Wellen der inneren metallischen Hülle (1) und ggf. der äußeren metallischen Hülle (2') durch Formgebung des ersten und zweiten Bandes mit einem Tiefzieh- oder Biegeverfahren gebildet werden.

9. Verfahren nach einem der Ansprüche 1 bis 5, dadurch gekennzeichnet, daß die Wellen der inneren metallischen Hülle (1) und ggf. der äußeren metallischen Hülle (2') durch ein Verfahren zur Verformung des ersten und zweiten Bandes nach deren Formung zu durch eine Diametralebene begrenzten Rotationshalbkörpern, Zylinder-, Kegel- oder Spitzbogensektoren gebildet werden.

10. Verfahren nach einem der Ansprüche 1 bis 9, dadurch gekennzeichnet, daß die gewellte innere Hülle (1) und die äußere Hülle (2) durch lokale Schweißung mit Hilfe eines der folgenden Verfahren zusammengebaut werden: Laserschweißung, Diffusionsschweißung, Mikro-WIG-Schweißung, Löten.

11. Verfahren nach einem der Ansprüche 1 bis 10, dadurch gekennzeichnet, daß durch Pulvermetallurgie mit Hilfe der Technik des löslichen Kerns oder der der entfernbaren Formkörper eine Innenwand (4) des inneren Überzugs (3) gebildet wird, die eine geriffelte, gewellte oder glatte Form aufweist.

12. Verfahren nach einem der Ansprüche 1 bis 11, dadurch gekennzeichnet, daß die Endbearbeitung der Kanten und der Oberfläche der Innenwand (4) des inneren Überzugs (3) mit wenigstens einem der folgenden Verfahren durchgeführt werden: Chemische Bearbeitung und Fertigbearbeitung mit Schleifpaste unter Druck.

13. Verfahren nach einem der Ansprüche 1 und 4 bis 12, dadurch gekennzeichnet, daß der äußere Überzug (5) direkt an der Außenwand der äußeren Hülle (2) durch Umgürten oder Umwickeln mit einem Verbundmaterial gebildet wird.

14. Verfahren nach Anspruch 1 oder einem der Ansprüche 4 bis 12, dadurch gekennzeichnet, daß der äußere Überzug (5) direkt an der Außenwand der äußeren Hülle (2) durch Elektroabscheidung gebildet wird.

15. Verfahren nach einem der Ansprüche 1 bis 14, dadurch gekennzeichnet, daß zwischen der äußeren Hülle (2) und dem äußeren Überzug (5) ein erstes zusätzliches Kühl- oder Heizsystem angeordnet wird, das eine zusätzliche gewellte innere metallische Hülle (101) und eine zusätzliche äußere metallische Hülle (102) umfaßt, die nach den obengenannten Schritten a) bis c) hergestellt und zusammengesetzt sind, um eine erste und zweite Reihe von alternierenden zusätzlichen Durchgängen (107, 109) für den Durchgang wenigstens eines Kühl- oder Heizfluids zu schaffen, ferner die zusätzliche gewellte innere Hülle (101) und die äußere Hülle (2) zusammenzusetzen und lokal zu verschweißen und den äußeren Überzug (5) an der Außenwand der zusätzlichen äußeren Hülle (102) anstatt auf der Außenwand der äußeren Hülle (2) zu bilden.

16. Verfahren nach einem der Ansprüche 1 bis 14, dadurch gekennzeichnet, daß zwischen der äußeren Hülle (2) und dem äußeren Überzug (5) mehrere zusätzliche Kühl- oder Heizsysteme (100, 102) gebildet und angeordnet werden, die jeweils eine zusätzliche gewellte innere metallische Hülle (101, 201) und eine zusätzliche äußere metallische Hülle (102, 202; 102', 202') umfassen, die nach den obengenannten Schritten a) bis c) hergestellt und zusammengesetzt sind, um in jedem zusätzlichen Kühl- oder Heizsystem (100, 200) eine erste und zweite Reihe von alternierenden zusätzlichen Durchgängen (107, 109; 207, 209) für den Durchgang wenigstens eines Kühl- oder Heizfluids zu schaffen, ferner i) die äußere Hülle (2, 2') und die zusätzliche gewellte innere Hülle (101) des innersten zusätzlichen Kühl- oder Heizsystems (100) und ii) die zusätzliche gewellte innere Hülle (201) eines jeden der anderen zusätzlichen Kühl- oder Heizsysteme (200) und die zusätzliche äußere Hülle (102, 102') des unmittelbar benachbarten zusätzlichen Kühl- oder Heizsystems (100) zusammenzusetzen und lokal zu verschweißen, und den äußeren Überzug (5) an der Außenwand der äußeren zusätzlichen Hülle (202, 202') des äußersten zusätzlichen Kühl- oder Heizsystems anstatt auf der Außenwand der äußeren Hülle (2, 2') zu bilden.

17. Verfahren nach Anspruch 15 oder 16, dadurch gekennzeichnet, daß zusätzlich Wellen (121, 122; 221, 222) an jeder zusätzlichen äußeren Hülle (102', 202') vor dem Zusammenbau gebildet werden, um eine wabenartige Struktur von zusätzlichen Kühl- oder Heizdurchgängen (107, 109, 207, 209) zu schaffen.

18. Verfahren nach einem der Ansprüche 1 bis 17, dadurch gekennzeichnet, daß wenigstens ein Teil der zwischen der inneren Hülle (1) und der äußeren Hülle (2, 2') und ggf. zwischen den zusätzlichen inneren (101, 201) und äußeren Hüllen (102, 202, 102', 202') gebildeten Durchgängen (7, 107, 207, 109, 209) mit Granulaten oder Pulvern gefüllt werden, die katalytische Reaktionen im Kühl- oder Heizfluid hervorrufen.

19. Brennkammer, hergestellt nach einem Verfahren gemäß einem der Ansprüche 1 bis 18.
